# EUROPEAN PATENT APPLICATION

(11) **EP 3 572 438 A1**
(43) Date of publication of application: **27.11.2019**
(21) Application number: 18741069.1
(22) Date of filing: 18.01.2018
(51) Int. Cl.: C08F 2/02, C08F 12/08, C08F 20/06, C08F 20/18, C08F 2/22, C08F 265/00

(54) **ALKALINE WATER SOLUBLE RESIN, METHOD FOR PRODUCING SAME, AND EMULSION POLYMER INCLUDING ALKALINE WATER SOLUBLE RESIN**

(30) Priority: 20.01.2017 KR 20170009671
(71) Applicant: Hanwha Chemical Corporation, Seoul 04541 (KR)
(72) Inventor: LEE, Su Jin, Daejeon 34128 (KR); KIM, Hee Yun, Daejeon 34120 (KR); YEUM, Tae Hoon, Daejeon 34120 (KR); CHO, Dae Won, Seoul 07927 (KR); CHOI, Jeong Hyun, Daejeon 34070 (KR)
(74) Representative: Glawe, Delfs, Moll
(86) International application number: PCT/KR2018/000842
(87) International publication number: WO 2018/135876

(57) **Abstract**

An alkali-soluble resin, a method of preparing an alkali-soluble resin, and an emulsion polymer including an alkali-soluble resin are provided. The alkali-soluble resin includes a first monomer including at least one of an acrylic monomer, a methacrylic monomer, and a styrene-based monomer and having no allyl group; and a second monomer having an allyl group, wherein the alkali-soluble resin is prepared by polymerizing the first monomer and the second monomer.

## Description

### [Technical Field]

The present invention relates to an alkali-soluble resin, a method of preparing an alkali-soluble resin, and an emulsion polymer including an alkali-soluble resin.

### [Background Art]

As a method of protecting the surface of a substrate such as paper, film, wood, or metal, a method of coating the surface of the substrate with an oil-based resin may be exemplified. The oil-based resin includes an oil-based organic solvent as a solvent for improving the workability of a coating process and improving coating properties. However, the oil-based resin is vulnerable to fire because it is flammable, and the oil-based organic solvent remaining on the surface of a coating film may have harmful effects on the human body.

Thus, there is a need to develop new coating materials having excellent adhesion to a substrate and excellent durability without flammability and toxicity.

In view of the above, a method of using a water-based resin as a coating material can be considered. However, in the case of a general water-based resin, adhesion to a substrate is insufficient as compared with the oil-based resin, and thus the surface of the substrate is easily lifted or peeled off, so that the water-based resin is problematic in that coating properties are poor.

### [Disclosure]

### [Technical Problem]

As an example of the water-based resin, a styrene/acrylic emulsion polymer may be exemplified. This styrene/acrylic emulsion polymer has not only excellent coating properties but also excellent durability. The styrene/acrylic emulsion polymer may be formed by the emulsion polymerization of unsaturated ethylenic monomers using a styrene/acrylic alkali-soluble resin.

In general, as the molecular weight of an alkali-soluble resin increases, the viscosity of an alkali-soluble resin solution in which the alkali-soluble resin is dissolved in an alkaline medium may also increase. When the viscosity of the alkali-soluble resin solution is high, it is difficult to increase a solid content, and thus it is difficult to form an emulsion polymer having excellent physical properties. However, when the molecular weight of the alkali-soluble resin is lowered in order to lower the viscosity of the alkali-soluble resin solution, there is a problem in that the alkali-soluble resin does not have enough durability to be used as a coating material for a substrate.

An aspect of the present invention is to provide an alkali-soluble resin having both polymerizability and durability, which are difficult to be compatible with each other in the prior art, because it can form an alkali-soluble resin solution having relatively low viscosity even though its weight average molecular weight is sufficiently large.

Another aspect of the present invention is to provide a method of preparing an alkali-soluble resin, which can form an alkali-soluble resin solution having relatively low viscosity even though the weight-average molecular weight of the alkali-soluble resin is sufficiently large.

Still another aspect of the present invention is to provide an emulsion polymer including an alkali-soluble resin, which can form an alkali-soluble resin solution having relatively low viscosity even though the weight average molecular weight of the alkali-soluble resin is sufficiently large.

However, the technical scope of the present invention is not limited to the aforementioned objects, and other unmentioned object can be clearly understood by those skilled in the art from the following descriptions.

### [Technical Solution]

According to an aspect of the present invention, there is provided an alkali-soluble resin, including: a first monomer including at least one of an acrylic monomer, a methacrylic monomer, and a styrene-based monomer and having no allyl group; and a second monomer having an allyl group, wherein the alkali-soluble resin is prepared by polymerizing the first monomer and the second monomer.

The alkali-soluble resin may have a weight average molecular weight (Mw) of 5,000 g/mol to 42,000 g/mol, and an alkali-soluble resin solution, obtained by dissolving 30 parts by weight of the alkali-soluble resin in 70 parts by weight of an aqueous ammonia solution of pH 8.0, may have a viscosity (µ) of 290 cps or more at 25°C.

When the viscosity of the alkali-soluble resin solution at 25°C is 2,000 cps or less, a ratio (Mw/µ) of the weight average molecular weight (Mw) to the viscosity (µ) may be 15.0 or more.

When the viscosity of the alkali-soluble resin solution at 25°C is more than 2,000 cps, a ratio (Mw/µ) of the weight average molecular weight (Mw) to the viscosity (µ) may be 6.0 or more.

The alkali-soluble resin may have an acid value of 96 mgKOH/g or less, and may have a glass transition temperature of 50°C to 120°C.

The first monomer may include an acrylic acid-based monomer, a methacrylic acid-based monomer, a non-acidic acrylic monomer, a non-acidic methacrylic monomer, and a styrene-based monomer.

According to another aspect of the present invention, there is provided a method of preparing an alkali-soluble resin, including: preparing a monomer solution including a first monomer including at least one of an acrylic monomer, a methacrylic monomer and a styrene-based monomer and a second monomer having an allyl group; and bulk-polymerizing the monomer solution.

A content of the second monomer may be 0.1 wt% to 25.0 wt% with respect to a total weight of the monomers.

The second monomer may include at least one of allyl acrylate, allyl methacrylate, diallyl maleate, diallyl adipate, and diallyl phthalate.

The first monomer may include an acrylic acid-based monomer, a methacrylic acid-based monomer, a non-acidic acrylic monomer, a non-acidic methacrylic monomer, and a styrene-based monomer.

A weight ratio of a sum of weights of the non-acidic acrylic monomer, the non-acidic methacrylic monomer and the styrene-based monomer and a sum of weights of acrylic acid-based monomer and methacrylic acid-based monomer may be 60: 40 to 95: 5.

The monomer solution further includes a solvent, and the solvent may be contained in an amount of more than 0 parts by weight and 20 parts by weight or less with respect to 100 parts by weight of the monomers.

The solvent includes dipropylene glycol methyl ether and water, and a content of the water may be more than 0 wt% and 25 wt% or less with respect to a total weight of the solvent.

According to the other aspect of the present invention, there is provided an emulsion polymer, having a core-shell structure, wherein the core includes a polymer of an unsaturated ethylenic monomer, and the shell surrounds the core and includes an alkali-soluble resin having a graft-bonded allyl group.

The emulsion polymer may be prepared by adding an alkali-soluble resin, an unsaturated ethylenic monomer and an initiator to an alkaline aqueous solution and emulsion-polymerizing the mixed solution.

Other details about the embodiments of the present invention are included in the detailed description and the appended drawings.

### [Advantageous Effects]

As described above, the alkali-soluble resin according to an embodiment of the present invention is excellent in durability such as chemical resistance or water resistance as well as polymerizability because an alkali-soluble resin solution in which the alkali-soluble resin is dissolved in an alkaline medium has relatively low viscosity even though the weight average molecular weight of the alkali-soluble resin is large.

Further, according to the method of preparing an alkali-soluble resin according to an embodiment of the present invention, there can be provided an alkali-soluble resin, which has both polymerizability and durability having not been compatible with each other, because it can form an alkali-soluble resin solution having relatively low viscosity even though its weight average molecular weight is sufficiently large.

Further, the emulsion polymer according to an embodiment of the present invention can be easily prepared by emulsion polymerization using an alkali-soluble resin having excellent polymerizability, and can be suitably used as a coating material of a substrate because of its improved durability.

The effects of the present invention are not limited by the foregoing, and other various effects are included in the present specification.

### [Description of Drawings]

FIG. 1 is a graph showing the weight average molecular weight of an alkali-soluble resin and the viscosity of an alkali-soluble resin solution according to the content of allyl methacrylate.
FIG. 2 is a photograph showing the results according to Experimental Example 3-2.

### [Modes of the Invention]

Advantages and features of the present invention and methods of accomplishing the same may be understood more readily by reference to the following detailed description of preferred embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims.

As used herein, the term "and/or" includes any and all combinations of one or more of the associated listed items. The numerical range indicated by using "to" represents a numerical range including the values described therebefore and thereafter as a lower limit and an upper limit, respectively. The term "about" or "approximately" means a value or numerical range within 20% of the value or numerical range described thereafter.

As used herein, the term "alkali-soluble" means that at least 10 g of a resin or a polymer is soluble in 1L of deionized water of pH 7 or more at room temperature.

As used herein, the term "emulsion polymer" refers to a particulate polymer prepared by emulsion polymerization, and includes latex particles.

As used herein, the term "acrylic compound" refers to a compound having an acryl group in a chemical structure, and the term "methacrylic compound" refers to a compound having a methacryl group in a chemical structure.

Hereinafter, an alkali-soluble resin, a method of preparing the same, and an emulsion polymer prepared using the alkali-soluble resin according to exemplary embodiments of the present invention will be described.

### Alkali-soluble resin

An alkali-soluble resin according to an exemplary embodiment of the present invention may be prepared by polymerizing a monomer composition including a first monomer having no allyl group and a second monomer having an allyl group. For example, the alkali-soluble resin may be prepared by free-radical polymerization, for example, continuous bulk polymerization of the monomer composition.

The first monomer may be a monomer having no allyl group. As used herein, the term "allyl group" refers to an atomic group represented by "CH₂=CHCH₂-*", as a monovalent unsaturated hydrocarbon. The first monomer includes an acrylic monomer, a methacrylic monomer, and/or a styrene-based monomer.

The acrylic monomer includes at least one of an acrylic acid-based monomer and a non-acidic acrylic monomer. As used herein, the term "non-acidic compound" refers to a compound having no carboxylic group in a chemical structure.

The non-acidic acrylic monomer can control the molecular weight and glass transition temperature (Tg) of the alkali-soluble resin. Examples of the non-acidic acrylic monomer that can be used in the preparing of the alkali-soluble resin according to the present embodiment may include methyl acrylate, ethyl acrylate, isopropyl acrylate, butyl acrylate, hexyl acrylate, and 2-ethylhexyl acrylate.

The acrylic acid-based monomer can control the acid value of the alkali-soluble resin. Further, when an emulsion polymer is prepared using the alkali-soluble resin and this emulsion polymer is used as a coating material as will be described later, the gloss and/or resolubility of a coating film can be improved, and the hardness thereof can be improved. An example of the acrylic acid-based monomer may include acrylic acid.

The methacrylic monomer includes at least one of a methacrylic acid-based monomer and a non-acidic methacrylic monomer.

The non-acidic methacrylic monomer can improve the hardness and durability such as water resistance or chemical resistance of the alkali-soluble resin. When the emulsion polymer is used as a coating material, the gloss and/or printability of the coating film can be improved. Examples of the non-acidic methacrylic monomer that can be used in the preparing of the alkali-soluble resin according to the present embodiment may include methyl methacrylate, ethyl methacrylate, and glycidyl methacrylate.

The methacrylic acid-based monomer can control the acid value of the alkali-soluble resin. Further, when the emulsion polymer is used as a coating material, the gloss and/or resolubility of the coating film can be improved, and the hardness thereof can be improved. An example of the methacrylic acid-based monomer may include methacrylic acid.

The styrene-based monomer can improve the hardness and durability of the alkali-soluble resin. When the emulsion polymer is used as a coating material, the gloss and/or printability of the coating film can be improved. Examples of the styrene-based monomer that can be used in the preparing of the alkali-soluble resin according to the present embodiment may include styrene (vinylbenzene), α-methylstyrene (isopropenylbenzene), β-methylstyrene (1-propenylbenzene), 4-methylstyrene (4-vinyl-1-methylbenzene), and 2,3-dimethylstyrene (1-ethenyl-2,3-dimethylbenzene).

As a non-limiting example, the first monomer may include all of an acrylic acid-based monomer, a methacrylic acid-based monomer, a non-acidic acrylic monomer, a non-acidic methacrylic monomer, and a styrene-based monomer.

In this case, the weight ratio of the sum of weights of non-acidic monomers (that is, the sum of weights of non-acidic acrylic monomer, non-acidic methacrylic monomer, and styrene-based monomer) and the sum of weights of acidic monomers (that is, the sum of weights of acrylic acid-based monomer and methacrylic acid-based monomer) may be about 60: 40 to 95: 5 or about 80: 20 to 85: 15. When the weight ratio of acidic monomers is 5 or less, the solubility of the alkali-soluble resin in a dispersion medium is lowered, which is not suitable for forming an emulsion polymer through emulsion polymerization as will be described later. When the weight ratio thereof is 40 or more, the durability of the alkali-soluble resin can be deteriorated.

When the acidic monomers include both the acrylic acid-based monomer and the methacrylic acid-based monomer, the weight ratio of the acrylic acid-based monomer and the methacrylic acid-based monomer may be about 55: 45 to 65: 35 or about 55: 45 to 60: 40. When the composition of the acidic monomers is controlled within the above range, an alkali-soluble resin and an emulsion polymer, having excellent application properties as a coating material such as gloss and/or resolubility, can be formed.

Meanwhile, the second monomer includes at least one monomer having an allyl group. That is, the alkali-soluble resin according to the present embodiment is prepared by polymerizing a monomer composition including an acrylic monomer, a methacrylic monomer, and/or a styrene-based monomer, and at least some of the monomers in the monomer composition may be monomers having an allyl group.

The monomer having an allyl group can contribute to an increase in the molecular weight of the polymerized alkali-soluble resin. For example, the monomer having an allyl group minimizes an increase in the viscosity of the alkali-soluble resin and increases the molecular weight of the alkali-soluble resin, thereby making it possible to form an alkali-soluble resin having improved durability while improving polymerizability.

The monomer having an allyl group may be an allyl alcohol-based compound, an alkoxylated allyl alcohol-based compound, an allyl ester-based compound, an allyl carbonate-based compound, or an allyl ether-based compound.

Examples of the monomer having an allyl group may include allyl acrylate, allyl methacrylate, diallyl maleate, diallyl adipate, and diallyl phthalate.

The content of the second monomer may be about 0.1 wt% to 25.0 wt%, about 0.1 wt% to 20.0 wt%, about 0.1 wt% to 15.0 wt%, about 0.1 wt% to 10 wt%, about 0.1 wt% to 5.0 wt%, about 0.1 wt% to 3.0 wt%, or about 0.1 wt% to 1.5 wt%, with respect to the total weight of all the monomers in the monomer composition. When the content of the second monomer exceeds 25.0 wt%, the polymerization of the alkali-soluble resin is difficult, and the durability of the alkali-soluble resin may be deteriorated. In addition, the weight average molecular weight value for the viscosity of the alkali-soluble resin may be lowered.

As a non-limiting example, the monomers in the monomer composition may include about 3 wt% to 4 wt% of a non-acidic acrylic monomer (for example, ethyl acrylate), about 35 wt% to 55 wt% of a non-acidic methacrylic monomer (for example, methyl methacrylate), about 20 wt% to 40 wt% of a styrene-based monomer (for example, styrene), about 8 wt% to 12 wt% of acrylic acid, about 5 wt% to 7 wt% of methacrylic acid, and about 0.1 wt% to 25 wt% of a monomer having an allyl group. The alkali-soluble resin can exhibit characteristics such as improved durability and hardness within the above range.

The monomer composition according to an exemplary embodiment of the present invention may further include a solvent and an initiator in addition to the first monomer and the second monomer.

The solvent may include dipropylene glycol methyl ether and water. When a mixed solvent of dipropylene glycol methyl ether and water is used as the solvent, the reaction between the solvent and the resin, for example, an esterification reaction, can be suppressed, and thus the viscosity of the alkali-soluble resin and/or the temperature in a reactor can be easily controlled. Further, even when a relatively small amount of acid monomers is used at low temperature and low pressure as compared with the prior art, an alkali-soluble resin having a narrow molecular weight distribution and a high acid value can be formed.

The solvent may be contained in an amount of more than 0 parts by weight and 20 parts by weight or less, or about 4 parts by weight to 20 parts by weight with respect to 100 parts by weight of all the monomers in the monomer composition. The content of water may be more than 0 wt% and 25 wt% or less with respect to the total weight of the solvent. When the content of water is 25 wt% or less, the viscosity of the resin, reaction temperature and pressure can be easily controlled, and the turbidity of a solution can be improved.

The initiator is not particularly limited as long as it can initiate the polymerization of an acrylic monomer, a methacrylic monomer and a styrene monomer, but may be an alkyl peroxybenzoate-based initiator. Further, as the initiator, an initiator having a half life of about 10 hours at 90°C to 120°C may be used. For example, the initiator may include t-butyl peroxybenzoate. The initiator may be contained in an amount of about 0.01 part by weight to 0.30 part by weight with respect to 100 parts by weight of all the monomers in the monomer composition.

In an exemplary embodiment where the alkali water-soluble resin is prepared by continuous bulk polymerization, the residence time in the reactor can affect the molecular weight, acid value, chromaticity and turbidity of the alkali-soluble resin. From this viewpoint, the reaction residence time may be about 10 minutes to 40 minutes. When the residence time is less than 10 minutes, the stability of continuous production is difficult. When the residence time is more than 40 minutes, the acid value and the molecular weight may be excessively lowered. The reaction temperature of bulk polymerization may be 100°C to 250°C or 150°C to 230°C.

According to the present embodiment, a high molecular weight alkali-soluble resin can be prepared through the second monomer having an allyl group even though a reaction proceeds at a relatively low temperature. Further, since the reaction conditions are not severe, the control of polymerization properties is easy, and the yield can be improved.

For example, the lower limit of the weight average molecular weight (Mw) of the alkali-soluble resin according to the present embodiment is about 5,000 g/mol or more, about 6,000 g/mol or more, about 7,000 g/mol or more, about 8,000 g/mol or more, about 9,000 g/mol or more, about 10,000 g/mol or more, about 11,000 g/mol or more, or about 12,000 g/mol or more. Further, the upper limit of the weight average molecular weight of the alkali-soluble resin is about 42,000 g/mol or less, about 40,000 g/mol or less, about 38,000 g/mol or less, about 36,000 g/mol or less, about 34,000 g/mol or less, about 32,000 g/mol, or about 30,000 g/mol or less.

The alkali-soluble resin according to the present embodiment can be prepared by polymerizing the monomer composition including the second monomer having an allyl group, thereby making it possible to prepare an alkali-soluble resin having a weight average molecular weight of 25,000 g/mol or more, which was difficult to manufacture in the past.

Further, since the alkali-soluble resin has a relatively high molecular weight, a hardness-improving property can be realized to impart sufficient durability, so that the physical properties of an emulsion polymer formed by emulsion polymerization can be reinforced, and a polymer having more stable emulsion characteristics can be provided, as will be described later.

The lower limit and upper limit of the viscosity (µ) of an alkali-soluble resin solution, obtained by dissolving 30 parts by weight of the alkali-soluble resin in 70 parts by weight of an aqueous ammonia solution of pH 8.0, at 25°C, are not particularly limited as long as emulsion polymerization can be performed under general conditions. For example, the lower limit of the viscosity (µ) of the alkali-soluble resin solution at 25°C may be about 290 cps or more. Further, the upper limit of the viscosity (µ) of the alkali-soluble resin solution at 25°C may be about 10,000 cps or less, about 5,000 cps or less, about 4,000 cps or less, about 2,000 cps or less, about 1,800 cps or less, about 1,600 cps or less, about 1,400 cps or less, about 1,200 cps or less, or 1,000 cps or less. Further, since the alkali-soluble resin solution has relatively low viscosity, functional solids can be sufficiently added as needed, thereby improving the coating properties of an emulsion polymer.

Meanwhile, the increase in the weight average molecular weight of the alkali-soluble resin and the increase in the viscosity of the alkali-soluble resin solution may be expressed in the form of an exponential function. That is, the weight average molecular weight of the alkali-soluble resin and the viscosity of the alkali-soluble resin solution may increase sharply.

In a non-limiting example, when the viscosity of the alkali-soluble resin solution at 25°C is 2,000 cps or less, the ratio (Mw/µ) of the weight average molecular weight of the alkali-soluble resin to the viscosity of the alkali-soluble resin solution at 25°C may be about 15.0 or more, about 16.0 or more, about 20.0 or more, or about 45.0 or more. The ratio of the weight average molecular weight to the viscosity means that the alkali-soluble resin can have a high molecular weight even though the viscosity of the alkali water soluble resin solution is low. That is, the alkali-soluble resin according to the present embodiment has a relatively high ratio of the weight average molecular weight to the viscosity in a low viscosity range, and thus can have both polymerizability and durability which could not be achieved in the past.

Further, when the viscosity of the alkali-soluble resin solution at 25°C is more than 2,000 cps, the ratio (Mw/µ) of the weight average molecular weight of the alkali-soluble resin to the viscosity of the alkali-soluble resin solution at 25°C may be about 6.0 or more, about 6.5 or more, about 7.0 or more, about 7.5 or more, about 8.0 or more, about 8.5 or more, or about 9.0 or more. That is, the alkali-soluble resin according to the present embodiment can have a relatively high molecular weight in a high viscosity range as compared with the prior art, whereas a relatively low-viscosity solution can be formed. The weight average molecular weight of the alkali-soluble resin is set to be very large, thereby improving the durability of the emulsion polymer.

The upper limit of the acid value of the alkali-soluble resin having durability may be about 110 mgKOH/g or less, about 105 mgKOH/g or less, about 100 mgKOH/g or less, about 96 mgKOH/g or less, about 95 mgKOH/g or less, or about 94 mgKOH/g or less. The lower limit of the acid value of the alkali-soluble resin is limited to a level at which emulsion polymerization is possible, and may be about 70 mgKOH/g or more, about 80 mgKOH/g or more, or about 90 mgKOH/g or more. When the emulsion polymer containing the alkali-soluble resin within the above range is applied as a coating material, the appearance of a coating film is excellent. When the acid value is 110 mgKOH/g or less, durability such as water resistance and chemical resistance is excellent. When the acid value is 70 mgKOH/g or more, emulsion polymerization can proceed as will be described later.

The glass transition temperature (Tg) of the alkali-soluble resin may be about 50°C to 120°C. When the glass transition temperature is within the above range, the minimum film forming temperature is lowered, and an emulsion polymer having excellent film properties can be formed. Therefore, the alkali-soluble resin is excellent in adhesion to a substrate, excellent in gloss and transparency, and thus can exhibit improved coating properties.

### Emulsion polymer

The emulsion polymer according to an exemplary embodiment of the present invention may have at least a partial core-shell structure. The core may include a polymer matrix, and the shell, which is a portion surrounding the core, may include an alkali-soluble resin according to an embodiment of the present invention. For example, the shell may include an alkali-soluble resin having a graft-bonded allyl group. The emulsion polymer may be prepared by the emulsion polymerization of monomers using an alkali-soluble resin as an emulsifier.

The core may include a polymer derived from an unsaturated ethylenic monomer. The polymer derived from an unsaturated ethylenic monomer may be formed by the polymerization of monomers surrounded by an emulsifier during an emulsion polymerization reaction. Examples of the unsaturated ethylenic monomer may include an acrylic monomer, a methacrylic monomer, and a styrene-based monomer. Since the acrylic monomer, methacrylic monomer and styrene-based monomers have been described in detail together with the alkali-soluble resin, a detailed description thereof will be omitted.

The shell may include an alkali-soluble resin according to an exemplary embodiment of the present invention. For example, the weight average molecular weight of the alkali-soluble resin constituting the shell may be about 5,000 g/mol to 42,000 g/mol. For example, the ratio of the weight average molecular weight of the alkali-soluble resin to the viscosity of the alkali-soluble resin solution at 25°C may be about 15.0 or more, about 16.0 or more, about 20.0 or more, or about 45.0 or more. Further, the upper limit of the acid value of the alkali-soluble resin constituting the shell may be about 110 mgKOH/g or less, and the lower limit thereof may be about 70 mgKOH/g or more. The glass transition temperature of the alkali water-soluble resin may be about 50°C to 120°C.

The alkali-soluble resin constituting the shell has a relatively high acid value and high glass transition temperature as compared with the polymer constituting the core, so that the coating properties such as hardness and/or wettability of a coating film can be improved.

Further, since the viscosity of the alkali-soluble resin solution is sufficiently low, the content of solid components such as additives can be increased, and thus the reinforcement and improvement in physical properties such as durability and film properties of the emulsion polymer can be expected. Moreover, the allyl group bonded to the main chain of the alkali-soluble resin in the form of a side chain can form a chemical bond with the unsaturated ethylenic monomer constituting the core during an emulsion polymerization reaction, and thus an emulsion structure can be formed more stably, and the durability of the shell can be further improved.

The emulsion polymer may contain the shell (that is, the portion derived from the alkali-soluble resin) in an amount of about 15 parts by weight to 60 parts by weight with respect to 100 parts by weight of the core (that is, the polymer derived from the unsaturated ethylenic monomer). When the content of the alkali-soluble resin is 15 parts by weight or more, emulsion polymerization proceeds to a sufficiently stable degree, so as to prevent gelation and to form a rigid emulsion polymer. When the content of the alkali-soluble resin is 60 parts by weight or more, the durability such as water resistance and chemical resistance of a coating film may be deteriorated.

When the emulsion polymer is prepared by emulsion polymerization, the alkali-soluble resin, which has a similar function to an anionic emulsifier, is dissolved in a dispersion medium to form micelles, and the unsaturated ethylenic monomer may be polymerized in a state surrounded by the micelles. Since a separate anionic or nonionic emulsifier other than the alkali-soluble resin is not used, the emulsion polymer is excellent in storage stability, and the coating film formed using this emulsion polymer is excellent in gloss and transparency. Further, as described above, since the alkali-soluble resin having the controlled weight average molecular weight, viscosity, acid value and glass transition temperature is used as an emulsifier, the emulsion polymer may have a narrow unimodal particle size distribution while having an average particle size on the order of nanometers, and thus there are advantages in preparing the emulsion polymer. Meanwhile, the reaction temperature of emulsion polymerization may be about 70°C to 90°C or about 85°C.

The dispersion medium in which the alkali water-soluble resin is dissolved and which is used in emulsion polymerization may be an aqueous medium having basicity. For example, the dispersion medium may include ammonia dissolved in water, potassium hydroxide and/or sodium hydroxide. The pH of the dispersion medium may be about 8.0 to 10.0 or about 9.0 to 10.0. When the pH of the dispersion medium is within the above range, high dispersibility can be obtained, and a transparent solution can be prepared.

In some embodiments, the emulsion polymerization may proceed by adding an initiator. The initiator may be introduced at one time at the beginning of the reaction, or may be introduced continuously or semi-continuously. Examples of the initiator used in emulsion polymerization may include persulfate initiators such as ammonium persulfate, potassium persulfate, and sodium persulfate.

Hereinafter, an alkali-soluble resin and an emulsion polymer according to exemplary embodiments of the present invention will be described in more detail with reference to Preparation Examples, Comparative Examples and Experimental Examples.

### Preparation Example 1: Preparation of alkali-soluble resin

### <Preparation Example 1-1>

A monomer mixture including 47.7 g of methyl methacrylate (MMA), 28.6 g of styrene (ST), 6.0 g of acrylic acid (AA), 8.8 g of methacrylic acid (MAA), 3.3 g of ethyl acrylate (EA), and 0.97 g of allyl methacrylate (ALMA) was prepared. 0.13 g of t-butyl peroxybenzoate and a mixed solvent (3.4 g of dipropylene glycol methyl ether (DPM) and 1.1 g of water (DW)) were added to the monomer mixture to prepare a monomer composition. Continuous bulk polymerization was carried out for 20 minutes at a temperature of about 218°C using a 1 L SUS reactor to obtain a resin.

### <Preparation Example 1-2>

A monomer composition was prepared and a resin was obtained in the same manner as in Preparation Example 1-1, except that a monomer mixture including 47.3 g of methyl methacrylate, 28.5 g of styrene, 6.0 g of acrylic acid, 8.8 g of methacrylic acid, 3.3 g of ethyl acrylate, and 1.43 g of allyl methacrylate was used.

### <Preparation Example 1-3>

A monomer composition was prepared and a resin was obtained in the same manner as in Preparation Example 1-1, except that a monomer mixture including 45.2 g of methyl methacrylate, 27.3 g of styrene, 6.0 g of acrylic acid, 8.8 g of methacrylic acid, 3.3 g of ethyl acrylate, and 4.77 g of allyl methacrylate was used.

### <Preparation Example 1-4>

A monomer composition was prepared and a resin was obtained in the same manner as in Preparation Example 1-1, except that a monomer mixture including 42.3 g of methyl methacrylate, 25.4 g of styrene, 6.0 g of acrylic acid, 8.8 g of methacrylic acid, 3.3 g of ethyl acrylate, and 9.54 g of allyl methacrylate was used.

### <Preparation Example 1-5>

A monomer composition was prepared and a resin was obtained in the same manner as in Preparation Example 1-1, except that a monomer mixture including 36.3 g of methyl methacrylate, 21.9 g of styrene, 6.0 g of acrylic acid, 8.8 g of methacrylic acid, 3.3 g of ethyl acrylate, and 19.1 g of allyl methacrylate was used.

### <Preparation Example 1-6>

A monomer composition was prepared and a resin was obtained in the same manner as in Preparation Example 1-1, except that a monomer mixture including 33.4 g of methyl methacrylate, 20.0 g of styrene, 6.0 g of acrylic acid, 8.8 g of methacrylic acid, 3.3 g of ethyl acrylate, and 23.8 g of allyl methacrylate was used.

### <Preparation Example 1-7>

A monomer composition was prepared and a resin was obtained in the same manner as in Preparation Example 1-1, except that a monomer mixture including 47.6 g of methyl methacrylate, 28.5 g of styrene, 6.0 g of acrylic acid, 8.8 g of methacrylic acid, 3.3 g of ethyl acrylate, and 1.14 g of allyl acrylate (ALA) was used.

### <Comparative Example 1-1>

A monomer composition was prepared and a resin was obtained in the same manner as in Preparation Example 1-1, except that a monomer mixture including 48.1 g of methyl methacrylate, 29.1 g of styrene, 6.0 g of acrylic acid, 8.8 g of methacrylic acid, and 3.3 g of ethyl acrylate was used.

### <Comparative Example 1-2>

A monomer composition was prepared and a resin was obtained in the same manner as in Preparation Example 1-1, except that a monomer mixture including 47.3 g of methyl methacrylate, 28.5 g of styrene, 6.0 g of acrylic acid, 8.8 g of methacrylic acid, 3.3 g of ethyl acrylate, and 1.47 g of hydroxyethyl methacrylate (HEMA) was used.

### <Comparative Example 1-3>

A monomer composition was prepared and a resin was obtained in the same manner as in Preparation Example 1-1, except that a monomer mixture including 47.3 g of methyl methacrylate, 28.4 g of styrene, 6.0 g of acrylic acid, 8.8 g of methacrylic acid, 3.3 g of ethyl acrylate, and 1.53 g of glycidyl methacrylate (GMA) was used.

### Preparation Example 2: Preparation of alkali-soluble resin solution

### <Preparation Example 2-1>

30.0 parts by weight of the resin obtained in Preparation Example 1-1 and 67.6 parts by weight of ion exchanged water were mixed and then heated to 85°C. Then, 2.4 parts by weight of ammonia water having a concentration of 28% was added three times. Then, the resultant mixture was stirred for 120 minutes to prepare an alkali-soluble resin solution.

### <Preparation Example 2-2>

An alkali-soluble resin solution was prepared in the same manner as in Preparation Example 2-1, except that the resin obtained in Preparation Example 1-2 was used.

### <Preparation Example 2-3>

An alkali-soluble resin solution was prepared in the same manner as in Preparation Example 2-1, except that the resin obtained in Preparation Example 1-3 was used.

### <Preparation Example 2-4>

An alkali-soluble resin solution was prepared in the same manner as in Preparation Example 2-1, except that the resin obtained in Preparation Example 1-4 was used.

### <Preparation Example 2-5>

An alkali-soluble resin solution was prepared in the same manner as in Preparation Example 2-1, except that the resin obtained in Preparation Example 1-5 was used.

### <Preparation Example 2-6>

An alkali-soluble resin solution was prepared in the same manner as in Preparation Example 2-1, except that the resin obtained in Preparation Example 1-6 was used.

### <Preparation Example 2-7>

An alkali-soluble resin solution was prepared in the same manner as in Preparation Example 2-1, except that the resin obtained in Preparation Example 1-7 was used.

### <Comparative Example 2-1>

An alkali-soluble resin solution was prepared in the same manner as in Preparation Example 2-1, except that the resin obtained in Comparative Example 1-1 was used.

### <Comparative Example 2-2>

An alkali-soluble resin solution was prepared in the same manner as in Preparation Example 2-1, except that the resin obtained in Comparative Example 1-2 was used.

### <Comparative Example 2-3>

An alkali-soluble resin solution was prepared in the same manner as in Preparation Example 2-1, except that the resin obtained in Comparative Example 1-3 was used.

### Preparation Example 3: Preparation of emulsion

### <Preparation Example 3-1>

137 g of the styrene/acrylic resin obtained in Preparation Example 1-1 and 441 g of water were put into a 1L glass reactor, 16 g of an aqueous ammonia solution was added while stirring to dissolve the resin, and then ammonium persulfate was continuously added for 120 minutes while raising temperature to 76.0°C. After 10 minutes from the start of the addition of ammonium persulfate, 196.4 g of a monomer mixture (weight ratio 81.4:15.7:3.0) including 159.8 g of styrene, 30.8 g of methyl methacrylate, and 5.8 g of glycidyl methacrylate was continuously added at a flow rate of 1.5 g/min for 180 minutes, so as to prepare an emulsion.

### <Comparative Example 3-1>

An emulsion was prepared by dissolving a resin and then adding a monomer mixture in the same manner as in Preparation Example 3-1, except that the resin obtained in Comparative Example 1-1 was used.

### Experimental Example 1: Measurement of physical properties of alkali-soluble resin

### <Experimental Example 1-1: Measurement of molecular weight of alkali-soluble resin>

Molecular weights of the resins obtained in Preparation Example 1 and Comparative Example 1 were measured using gel permeation chromatography, and the results thereof are given in Table 1. Each of the resins obtained in Preparation Example 1 and Comparative Example 1, as measurement samples, was dissolved in tetrahydrofuran (THF) at a concentration of 0.1%. Polystyrene was used as a standard sample. In the chromatography measurement, a mobile phase was tetrahydrofuran, and a flow rate was 1 mL/min.

### <Experimental Example 1-2: Measurement of acid value of alkali-soluble resin>

1.0 g of each of the resins obtained in Preparation Example 1 and Comparative Example 1 was dissolved in 50.0 g of tetrahydrofuran. Then, 6 mL of a 1% phenolphthalein solution was added, and titration was carried out with a standard potassium hydroxide solution (KOH, 0.1M) to measure an acid value, and the results thereof are given in Table 1.

### Experimental Example 2: Measurement of viscosity of alkali-soluble resin solution

Each of the resin solutions prepared in Preparation Example 2 and Comparative Example 2 was stored in a thermostatic chamber at 25°C to maintain temperature, and the viscosity thereof was measured using a Brookfield viscometer (LV type) Spindle No. 2 in a state where the rotation speed of the spindle was 100 rpm, and the results thereof are given in Table 2.

### Experimental Example 3: Measurement of physical properties of emulsion

### <Experimental Example 3-1: Evaluation of water resistance>

Opaque paper was coated with each of the polymers obtained in Preparation Example 3 and Comparative Example 3 to a thickness of 50 µm using Wire Bar No. 22, dried at 100°C for 1 minute, and then additionally dried at room temperature for 24 hours, so as to form a coating film. Then, 25°C water was put into a vial, and the vial was inverted onto the coating film to allow water to contact the coating film. It was checked whether cloudiness and cracks occurred on the surface of the coating film having contacted water for 24 hours, and the results thereof are given in Table 3.

### <Experimental Example 3-2: Evaluation of alcohol resistance>

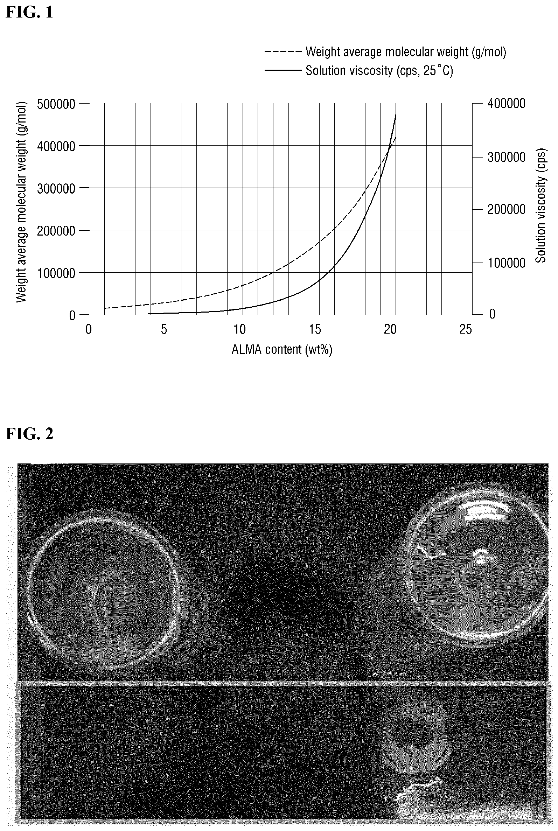

A coating film was formed using each of the polymers obtained in Preparation Example 3 and Comparative Example 3 in the same manner as in Experimental Example 2-1. Then, a 50% ethanol solution was put into a vial, and the vial was inverted onto the coating film to allow ethanol to contact the coating film. It was checked whether cloudiness and cracks occurred on the surface of the coating film having contacted ethanol for 2 hours, and the results thereof are shown in Table 3 and FIG. 2.

### <Experimental Example 3-3: Measurement of hardness>

A glass plate was coated with each of the polymers obtained in Preparation Example 3 and Comparative Example 3 to a thickness of 100 µm using an applicator, dried at 50°C for 24 hours, cooled at room temperature, and then the hardness of the coating film was measured. The results thereof are given in Table 3. In the measurement of hardness, a pencil core specified in KG G2603 was placed onto the surface of the coating film at an angle of 45° using a pencil hardness tester (Kipae E & T), and was moved at a speed of 700 mm/min while pressed by a load of 500 kgf to scratch the surface of the coating film, so as to measure the surface hardness of the coating film. Each time the hardness was measured, the pencil was kept in an initial state (90° angle of pencil) using sandpaper. In pendulum hardness measurement, the glass plate was fixed, the hardness was measured using the Koenig pendulum, and then second and count values were recorded.

**[Table 1]**

| | | Preparation Example 1-1 | Preparation Example 1-2 | Preparation Example 1-3 | Preparation Example 1-4 | Preparation Example 1-5 |
|---|---|---|---|---|---|---|
| Monomer mixture composition | MMA | 47.7 | 47.3 | 45.2 | 42.3 | 36.3 |
| | ST | 28.6 | 28.5 | 27.3 | 25.4 | 21.9 |
| | AA | 6 | 6 | 6 | 6 | 6 |
| | MAA | 8.8 | 8.8 | 8.8 | 8.8 | 8.8 |
| | EA | 3.3 | 3.3 | 3.3 | 3.3 | 3.3 |
| | ALMA | 0.97 | 1.43 | 4.77 | 9.54 | 19.1 |
| | ALA | - | - | - | - | - |
| | HEMA | - | - | - | - | - |
| | GMA | - | - | - | - | - |
| Mixed solvent | DPM | 3.4 | 3.4 | 3.4 | 3.4 | 3.4 |
| | DW | 1.1 | 1.1 | 1.1 | 1.1 | 1.1 |
| Initiator | t-BPB | 0.13 | 0.13 | 0.13 | 0.13 | 0.13 |
| Reaction temperature (°C) | | 218 | 218 | 218 | 218 | 218 |
| Volatile content (wt%) | | 0.3 | 0.4 | 0.5 | 1.2 | 1.6 |
| Measurement of physical properties | Number average molecular weight | 5099 | 7200 | 8620 | 21474 | 118421 |
| | Weight average molecular weight | 13927 | 20150 | 24589 | 69146 | 444078 |
| | Molecular weight distribution | 2.73 | 2.8 | 2.85 | 3.22 | 3.75 |
| | Acid value | 95 | 96 | 94 | 92 | 98 |

| | | Preparation Example 1-6 | Preparation Example 1-7 | Comparative Example 1-1 | Comparative Example 1-2 | Comparative Example 1-3 |
|---|---|---|---|---|---|---|
| Monomer mixture composition | MMA | 33.4 | 47.6 | 48.1 | 47.3 | 47.3 |
| | ST | 20 | 28.5 | 29.1 | 28.5 | 28.4 |
| | AA | 6 | 6 | 6 | 6 | 6 |
| | MAA | 8.8 | 8.8 | 8.8 | 8.8 | 8.8 |
| | EA | 3.3 | 3.3 | 3.3 | 3.3 | 3.3 |
| | ALMA | 23.8 | - | - | - | - |
| | ALA | - | 1.14 | - | - | - |
| | HEMA | - | - | - | 1.47 | - |
| | GMA | - | - | - | - | 1.53 |
| Mixed solvent | DPM | 3.4 | 3.4 | 3.4 | 3.4 | 3.4 |
| | DW | 1.1 | 1.1 | 1.1 | 1.1 | 1.1 |
| Initiator | t-BPB | 0.13 | 0.13 | 0.13 | 0.13 | 0.13 |
| Reaction temperature (°C) | | 218 | 218 | 218 | 218 | 218 |
| Volatile content (wt%) | | Not measurable | 0.9 | 0.4 | Not measurable | Not measurable |
| Measurement of physical properties | Number average molecular weight | | 9242 | 4552 | | |
| | Weight average molecular weight | | 35121 | 11569 | | |
| | Molecular weight distribution | | 3.8 | 2.54 | | |
| | Acid value | | 94 | 98 | | |

**[Table 2]**

| | | Preparation Example 2-1 | Preparation Example 2-2 | Preparation Example 2-3 | Preparation Example 2-4 | Preparation Example 2-5 |
|---|---|---|---|---|---|---|
| Solid content (wt%) | | 30 | 28.9 | 29.3 | 29.1 | 28.9 |
| Measurement of physical properties | Weight average molecular weight (Mw) | 13927 | 20150 | 24589 | 69146 | 444078 |
| | Viscosity (cps, 25°C (µ) | 294 | 940 | 2816 | >10000 | >10000 |
| | pH | 8 | 8.1 | 8.2 | 8.1 | 8.1 |
| | Mw/µ | 47.4 | 21.4 | 8.7 | - | - |

| | | Preparation Example 2-6 | Preparation Example 2-7 | Comparative Example 2-1 | Comparative Example 2-2 | Comparative Example 2-3 |
|---|---|---|---|---|---|---|
| Solid content (wt%) | | Not measurable | 29.5 | 29.8 | Not measurable | Not measurable |
| Measurement of physical properties | Weight average molecular weight (Mw) | | 35121 | 11569 | | |
| | Viscosity (cps, 25°C (µ) | | 5400 | 1232 | | |
| | pH | | 8.1 | 8.2 | | |
| | Mw/µ | | 6.51 | 9.3 | | |

**[Table 3]**

| | Preparation Example 3-1 | Comparative Example 3-1 |
|---|---|---|
| Water resistance evaluation | X | X |
| Alcohol resistance evaluation | X | Δ |
| Pencil hardness measurement | H level | HB level |
| Pendulum hardness measurement | 190/134 | 169/119 |

FIG. 1 is a graph showing the weight average molecular weight of an alkali-soluble resin and the viscosity of an alkali-soluble resin solution according to the content of allyl methacrylate based on the results of Experimental Example 1 and Experimental Example 2.

First, referring to FIG. 1, it can be ascertained that the weight average molecular weight and the viscosity sharply increases according to an increase in the content of allyl methacrylate. Both the weight average molecular weight and the viscosity may be expressed in the form of an exponential function. For example, the weight average molecular weight (Mw) = 12293e^{0.1767x}, and the viscosity (µ) of the solution = 366.82e^{0.3465x} (here, x is wt% of ally methacrylate).

Further, it can be ascertained that, in the range where the content of ally methacrylate is 5 wt% or less, an increase in the viscosity of the solution is relatively small, but an increase in the weight average molecular weight is relatively large. When the content of allyl methacrylate is 5 wt%, the weight average molecular weight of the alkali-soluble resin is about 30,000 g/mol, and the viscosity of the alkali-soluble resin solution is about 2,000 cps. Moreover, it can be ascertained that, in the range where the content of ally methacrylate is more than 5 wt% and 10 wt% or less, an increase in the viscosity of the solution is larger.

Referring to Table. 1, it can be ascertained that the molecular weight of the alkali-soluble resin increases according to an increase in the content of a monomer having an allyl group, that is, allyl methacrylate. In the case of Comparative Example 1-2 and Comparative Example 1-3, each of the resins did not have fluidity, and, particularly, in the case of Comparative Example 1-2, the resin was completely solid, so that the measurement of physical properties of the resin was impossible. Further, it can be ascertained that the resins according to Preparation Examples can be configured to have a very high weight average molecular weight.

Referring to Table 2, it can be ascertained that, in the case of the alkali-soluble resins according to Preparation Examples, the viscosity of the alkali-soluble resin solution is relatively low even though the weight average molecular weight of the alkali-soluble resin is very high.

Referring to Table 3, it can be ascertained that the emulsion polymer prepared using the alkali-soluble resin including a monomer having an allyl group has excellent alcohol resistance compared to the case of using a monomer having no allyl group. Specifically, referring to FIG. 2, it can be ascertained that the coating film (left in FIG. 2) of the emulsion prepared in Preparation Example 3-1 has excellent coating properties because a change in the surface of the coating film did not appear even after the surface thereof was in contact with alcohol. In contrast, it can be ascertained that, in the coating film (right in FIG. 2) of the emulsion prepared in Comparative Example 3-1, cloudiness somewhat occurred after this coating film was in contact with alcohol.

Moreover, it can be ascertained that the emulsion polymer prepared using the alkali-soluble resin including a monomer having an allyl group is excellent in both pencil hardness and pendulum hardness compared to the case of using a monomer having no allyl group. The reason for this may be that, since the shell of the emulsion polymer having a core-shell structure has a graft-bonded allyl group, the shell can form a chemical bond with an unsaturated ethylenic monomer constituting the core, and thus an emulsion structure can be more stably formed, thereby improving durability.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An alkali-soluble resin, comprising:
a first monomer including one or more of an acrylic monomer, a methacrylic monomer, and a styrene-based monomer and having no allyl group; and
a second monomer having an allyl group,
wherein the alkali-soluble resin is prepared by polymerizing the first monomer and the second monomer.

2. The alkali-soluble resin of claim 1,
wherein the alkali-soluble resin has a weight average molecular weight (Mw) of 5,000 g/mol to 42,000 g/mol, and
an alkali-soluble resin solution, obtained by dissolving 30 parts by weight of the alkali-soluble resin in 70 parts by weight of an aqueous ammonia solution of pH 8.0, has a viscosity (µ) of 290 cps or more at 25°C.

3. The alkali-soluble resin of claim 2,
wherein when the viscosity of the alkali-soluble resin solution at 25°C is 2,000 cps or less, a ratio (Mw/µ) of the weight average molecular weight (Mw) to the viscosity (µ) is 15.0 or more.

4. The alkali-soluble resin of claim 3,
wherein when the viscosity of the alkali-soluble resin solution at 25°C is more than 2,000 cps, a ratio (Mw/µ) of the weight average molecular weight (Mw) to the viscosity (µ) is 6.0 or more.

5. The alkali-soluble resin of claim 2,
wherein the alkali-soluble resin has an acid value of 96 mgKOH/g or less, and has a glass transition temperature of 50°C to 120°C.

6. The alkali-soluble resin of claim 5,
wherein the first monomer includes an acrylic acid-based monomer, a methacrylic acid-based monomer, a non-acidic acrylic monomer, a non-acidic methacrylic monomer, and a styrene-based monomer.

7. A method of preparing an alkali-soluble resin, comprising:
preparing a monomer solution including a first monomer including one or more of an acrylic monomer, a methacrylic monomer and a styrene-based monomer and a second monomer having an allyl group; and
bulk-polymerizing the monomer solution.

8. The method of claim 7,
wherein a content of the second monomer is 0.1 wt% to 25.0 wt% with respect to a total weight of the monomers.

9. The method of claim 8,
wherein the second monomer includes one or more of allyl acrylate, allyl methacrylate, diallyl maleate, diallyl adipate, and diallyl phthalate.

10. The method of claim 9,
wherein the first monomer includes an acrylic acid-based monomer, a methacrylic acid-based monomer, a non-acidic acrylic monomer, a non-acidic methacrylic monomer, and a styrene-based monomer.

11. The method of claim 10,
wherein a weight ratio of a sum of weights of the non-acidic acrylic monomer, the non-acidic methacrylic monomer and the styrene-based monomer and a sum of weights of acrylic acid-based monomer and methacrylic acid-based monomer is 60: 40 to 95: 5.

12. The method of claim 9,
wherein the monomer solution further includes a solvent, and
the solvent is contained in an amount of more than 0 parts by weight and 20 parts by weight or less with respect to 100 parts by weight of the monomers.

13. The method of claim 12,
wherein the solvent includes dipropylene glycol methyl ether and water, and
a content of the water is more than 0 wt% and 25 wt% or less with respect to a total weight of the solvent.

14. An emulsion polymer, having a core-shell structure,
wherein the core includes a polymer of an unsaturated ethylenic monomer, and
the shell surrounds the core and includes an alkali-soluble resin having a graft-bonded allyl group.

15. The emulsion polymer of claim 14,
wherein the emulsion polymer is prepared by adding an alkali-soluble resin, an unsaturated ethylenic monomer and an initiator to an alkaline aqueous solution and emulsion-polymerizing the mixed solution.
